# EUROPEAN PATENT APPLICATION

(11) **EP 4 546 796 A1**
(43) Date of publication of application: **30.04.2025**
(21) Application number: 23894743.6
(22) Date of filing: 04.09.2023
(51) Int. Cl.: H04N 21/266, H04N 21/234, H04N 21/44, H04N 21/472, H04N 21/81, H04N 21/6334, G06Q 30/02

(54) **SERVER DEVICE, CONTROL METHOD THEREOF, AND ADVERTISEMENT SYSTEM**

(30) Priority: 23.11.2022 KR 20220158668
(71) Applicant: Samsung Electronics Co., Ltd., Suwon-si, Gyeonggi-do 16677 (KR)
(72) Inventor: KIM, Youngjin, Suwon-si, Gyeonggi-do 16677 (KR); KWAK, Jongwon, Suwon-si, Gyeonggi-do 16677 (KR)
(74) Representative: Gulde & Partner
(86) International application number: PCT/KR2023/013148
(87) International publication number: WO 2024/111811

(57) **Abstract**

A server apparatus includes a processor that transmits, to an external server, a request of an advertisement content corresponding to a request of a first image content obtained from a first electronic apparatus. Based on obtaining a first advertisement content corresponding to the request of the advertisement content from the external server, the processor provides to the first electronic apparatus through the communicator the first image content into which the obtained first advertisement content is inserted. The processor stores the first advertisement content a memory based on identification information corresponding to whether the first advertisement content included in the first image content is played. Based on obtaining a request for a second image content from the first electronic apparatus, the processor transmits, to the first electronic apparatus, the second image content into which the stored first advertisement content is inserted.

## Description

### [Technical Field]

The disclosure relates to a server apparatus, a controlling method of the server apparatus, and an advertisement system, and more particularly, to a server apparatus for increasing an ads render rate of an advertisement exposed to a consumer, a controlling method of the server apparatus, and an advertisement system.

### [Background Art]

The online advertisement market has advanced rapidly. For example, recently, a real-time bidding (RTB), which is a method of purchasing an advertisement inventory in one impression unit through RTB has gained attention.

For example, four advertisements may be inserted in one video on demand (VOD) content through bidding, and if a consumer has watched only two advertisements, the remaining two advertisements become unexecuted advertisements, which becomes a loss to an advertiser or a publisher.

Therefore, there may be a need for technology to improve the ads render rate indicating a rate of advertisements exposed to an actual consumer compared to the number of advertisements that won bidding.

### [Disclosure]

### [Technical Solution]

According to an aspect of the disclosure, a server apparatus includes a communicator; at least one memory; and at least one processor configured to: transmit, to a external server through the communicator, a request of an advertisement content corresponding to a request of a first image content obtained from a first electronic apparatus; based on obtaining a first advertisement content corresponding to the request of the advertisement content from the external server, transmit, to the first electronic apparatus through the communicator, the first image content into which the obtained first advertisement content is inserted; store the first advertisement content in the at least one memory based on identification information corresponding to whether the first advertisement content included in the first image content is played; and based on obtaining a request for a second image content from the first electronic apparatus, transmit, to the first electronic apparatus through the communicator, the second image content into which the stored first advertisement content is inserted.

The at least one processor may be further configured to: based on a number of items of advertisement content to be inserted into the second image content being greater than the number of items of advertisement content stored in the at least one memory, transmit a request for another advertisement content to the external server through the communicator, and based on obtaining a second advertisement content from the external server based on the provided request, transmit the obtained second advertisement content and the second image content into which the first advertisement content stored in the at least one memory may be provided to the first electronic apparatus through the communicator.

The at least one processor may be further configured to: obtain a first private key corresponding to the first electronic apparatus together with a request for the first image content from the first electronic apparatus, based on identifying that the first advertisement content is not played based on the identification information corresponding to whether to the first advertisement content is played, match the first advertisement content with the first private key and store the matched first advertisement content in the at least one memory.

The at least one processor may be further configured to: based on obtaining the first private key together with a request for the second image content from the first electronic apparatus, transmit the second image content, into which the first advertisement content matched with the first private key and stored is inserted, to the first electronic apparatus through the communicator.

The at least one processor may be further configured to: based on obtaining a first private key corresponding to the first electronic apparatus together with a request for the first image content from the first electronic apparatus, allocate the first private key to a first group among a plurality of groups, and based on identifying that the first advertisement content is not played based on the identification information corresponding to whether the first advertisement content is played, match the first advertisement content with the first group and store in the at least one memory.

The at least one processor may be further configured to: based on obtaining a second private key corresponding to a second electronic apparatus from the second electronic apparatus along with a request for a third image content, and based on the obtained second private key being allocated to the first group from among the plurality of groups, transmit the third image content into which the stored first advertisement content is inserted to the second electronic apparatus through the communicator.

The plurality of groups are classified according to at least one criterion among gender, age group, or region, and wherein the at least one processor may be further configured to allocate the first private key to the first group according to information on an advertisement target group included in the first advertisement content or watching history information obtained from the first electronic apparatus.

The at least one processor may be further configured to: based on an advertisement target included in information about the advertisement target group not having a restriction, or the first private key not being allocated to one of the plurality of groups according to the watching history information, match the first advertisement content with a public group and store in the at least one memory, wherein the public group may be a group in which an advertisement content is providable regardless of whether a private key is matched.

The first advertisement content may include an expiration tag indicating an advertisement validity period and a reusable tag indicating whether an advertisement is reusable, and wherein the at least one processor may be further configured to, based on the advertisement validity period not being elapsed and the advertisement being usable based on the expiration tag and the reusable tag of the first advertisement content, transmit the first advertisement content stored in the at least one memory in the second image content and the second image content to which the first advertisement content is inserted to the first electronic apparatus through the communicator.

The identification information corresponding to whether the first advertisement content is played may include at least one of information about a play time that the first image content in which the first advertisement content is played in the first electronic apparatus or information generated in the first electronic apparatus based on the first advertisement content being played.

According to an aspect of the disclosure, a method of controlling a server apparatus includes: transmitting, to an external server, a request of an advertisement content corresponding to a request of a first image content obtained from a first electronic apparatus; based on obtaining a first advertisement content corresponding to the request of the advertisement content from the external server, transmitting, to the first electronic apparatus, the first image content into which the obtained first advertisement content is inserted; storing the first advertisement content based on identification information corresponding to whether the first advertisement content included in the first image content is played; and based on obtaining a request for a second image content from the first electronic apparatus, transmitting, to the first electronic apparatus, the second image content into which the stored first advertisement content is inserted.

The transmitting, to the first electronic apparatus, the second image content into which the stored first advertisement content is inserted may include: based on a number of items of advertisement content to be inserted into the second image content being greater than the number of items of advertisement content stored in at least one memory, transmitting a request for another advertisement content to the external server; and based on obtaining a second advertisement content from the external server based on the request, inserting the obtained second advertisement content and the stored first advertisement content in the second image content and transmitting the second image content into which the first advertisement content and the second advertisement content are inserted to the first electronic apparatus.

The method may include obtaining a first private key corresponding to the first electronic apparatus together with a request for the first image content from the first electronic apparatus, and wherein the storing may include, based on identifying that the first advertisement content is not played based on the identification information corresponding to whether to the first advertisement content is played, matching the first advertisement content with the first private key and storing the matched advertisement content.

The transmitting, to the first electronic apparatus, the second image content into which the first advertisement content is inserted may include, based on obtaining the first private key together with a request for the second image content from the first electronic apparatus, transmitting the second image content, into which the first advertisement content matched with the first private key and stored is inserted, to the first electronic apparatus.

According to an aspect of the disclosure, an advertisement system includes an electronic apparatus; an advertisement server; and a server apparatus including at least one processor configured to execute at least one instruction stored in at least one memory to: transmit, to the advertisement server, a request of an advertisement content corresponding to a request of a first image content obtained from the electronic apparatus, based on obtaining the advertisement content corresponding to the request of the advertisement content from the advertisement server, transmit, to the electronic apparatus, the first image content into which the obtained advertisement content is inserted, store the advertisement content based on identification information corresponding to whether a first advertisement content included in the first image content is played, and based on obtaining a request for a second image content from the electronic apparatus, transmit, to the electronic apparatus, the second image content into which the stored advertisement content is inserted.

According to an aspect of the disclosure, an electronic apparatus includes at least one memory; and at least one processor configured to: provide, to a server, a request of an advertisement content corresponding to a request of a first image content obtained from a second electronic apparatus; based on obtaining a first advertisement content corresponding to the request of the advertisement content from the server, provide, to the second electronic apparatus, the first image content into which the obtained first advertisement content is inserted; store the first advertisement content in the at least one memory based on identification information corresponding to whether the first advertisement content included in the first image content is played; and based on obtaining a request for a second image content from the second electronic apparatus, provide, to the second electronic apparatus, the second image content into which the stored first advertisement content is inserted.

The at least one processor may be further configured to: based on a number of items of advertisement content to be inserted into the second image content being greater than the number of items of advertisement content stored in the at least one memory, provide a request for another advertisement content to the server, and based on obtaining a second advertisement content from the server based on the provided request, provide the obtained second advertisement content and the second image content into which the first advertisement content stored in the at least one memory is provided to the second electronic apparatus.

The at least one processor may be further configured to: obtain a first private key corresponding to the second electronic apparatus together with a request for the first image content from the second electronic apparatus, based on identifying that the first advertisement content is not played based on the identification information corresponding to whether to the first advertisement content is played, match the first advertisement content with the first private key and store the matched first advertisement content in the at least one memory.

The at least one processor may be further configured to: based on obtaining the first private key together with a request for the second image content from the second electronic apparatus, provide the second image content, into which the first advertisement content matched with the first private key and stored is inserted, to the second electronic apparatus.

The at least one processor may be further configured to: based on obtaining a first private key corresponding to the second electronic apparatus together with a request for the first image content from the second electronic apparatus, allocate the first private key to a first group among a plurality of groups, and based on identifying that the first advertisement content is not played based on the identification information corresponding to whether the first advertisement content is played, match the first advertisement content with the first group and store in the at least one memory.

### [Description of Drawings]

The above and other aspects, features, and advantages of embodiments of the disclosure will be more apparent from the following description taken in conjunction with the accompanying drawings, in which:
FIG. 1 is a diagram illustrating a real time advertisement system according to one or more embodiments of the disclosure;
FIG. 2 is a diagram illustrating a configuration of an advertisement system according to one or more embodiments of the disclosure;
FIG. 3 is a block diagram illustrating a configuration of a server apparatus according to one or more embodiments of the disclosure;
FIG. 4A is a diagram illustrating operation of a reusable advertisement according to one or more embodiments of the disclosure;
FIG. 4B is a diagram illustrating operation of a reusable advertisement according to one or more embodiments of the disclosure;
FIG. 5 is a diagram illustrating an expiration tag and a reuse tag according to one or more embodiments of the disclosure;
FIG. 6 is a diagram illustrating a configuration of an advertisement system according to one or more embodiments of the disclosure;
FIG. 7 is a block diagram illustrating an electronic apparatus according to one or more embodiments of the disclosure; and
FIG. 8 is a flowchart illustrating a method of controlling a server apparatus according to one or more embodiments of the disclosure.

### [Mode for Invention]

**In** describing embodiments of the disclosure, detailed descriptions of related art techniques are omitted when it is determined that the disclosure may unnecessarily obscure the gist of the disclosure. **In** addition, the description of the same configuration of the disclosure will be omitted.

The suffix "part" for a component used in the description of the disclosure is added or used in consideration of the convenience of the specification, and it is not intended to have a meaning or role that is distinct from each other.

The terminology used in this disclosure is used to describe an embodiment, and is not intended to restrict and/or limit the disclosure. A singular expression includes plural expressions unless the context clearly indicates otherwise.

In the disclosure, the term "has," "may have," "includes" or "may include" indicates existence of a corresponding feature (e.g., a numerical value, a function, an operation, or a constituent element such as a component), but does not exclude existence of an additional feature.

In the disclosure, the terms "first, second, etc." may be used to describe various elements regardless of their order and/or importance and to discriminate one element from other elements, but are not limited to the corresponding elements.

If it is described that an element (e.g., first element) is "operatively or communicatively coupled with/to" or is "connected to" another element (e.g., second element), it may be understood that the element may be connected to the other element directly or through still another element (e.g., third element). When it is mentioned that one element (e.g., first element) is "directly coupled" with or "directly connected to" another element (e.g., second element), it may be understood that there is no element (e.g., third element) present between the element and the other element.

The terms used in embodiments of the disclosure may be interpreted in a meaning commonly known to those of ordinary skill in the art unless otherwise defined.

Throughout the disclosure, the expression "at least one of a, b or c" indicates only a, only b, only c, both a and b, both a and c, both b and c, or all of a, b, and c.

Various embodiments of the disclosure will be described in detail with reference to the accompanying drawings.

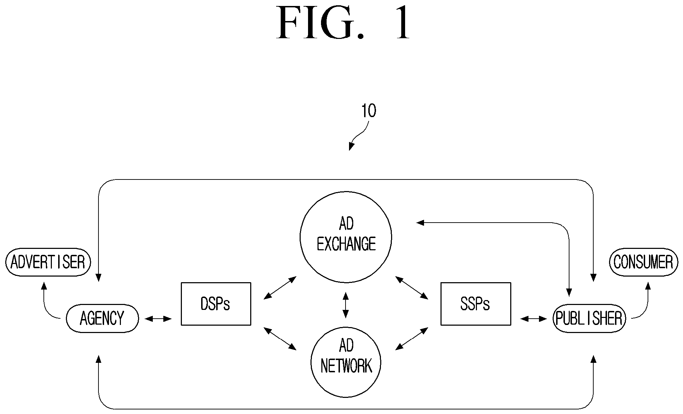

FIG. 1 is a diagram illustrating a real time advertisement system according to one or more embodiments of the disclosure. The real time advertisement system 10 may be an advertisement system of a real time bidding (RTB).

Unlike the past in which an advertiser purchases a large amount of inventory at a fixed price, in the RTB, an advertisement inventory is exchanged in real time in a one-time impression unit. In order to purchase a desired inventory, an advertiser participates in bids and a publisher sells inventory to an advertiser that proposes the highest price. Therefore, an advertiser may purchase a desired inventory at a reasonable price, and the publisher may sell a possessed inventory at an optimal price, so the RTB has become a mainstream of an online advertisement market.

Referring to FIG. 1, the ad network is a mediation platform connecting an advertiser and a publisher. The ad network plays a role of matching and selling a lot of inventories of publishers by categorizing based on demands of advertisers.

A demand side platforms (DSP) is a platform that enables an advertiser (or agency) to manage and purchase inventory owned by various ad networks through one interface. An advertiser (or agency) may efficiently purchase various inventories according to target information desired by an advertiser, such as gender, age, region, interested matter, etc. through the DSP.

A supply side platform (SSP) is a system that helps to automatically sell and manage an inventory held by a publisher. The SSP provides an advertisement inventory to all advertisers who are likely to purchase inventory of the purchaser, including add exchange, and may maximize profits of the publisher.

Ad exchange is in the form of one step advanced from the ad network, and is connected to a number of ad networks, DSPs, and SSP to help purchase and sell a large amount of advertising inventory. The price of the advertisement inventory is made through the RTB method.

In this real time advertisement system 10, advertisement traded through real time bidding is inserted in content and provided to a consumer, at this time, the advertisement inserted in the content may not be actually exposed to a consumer.

For example, a plurality of advertisements are bid and inserted in a VOD content, wherein if a user fast forwards during watching or stops watching the ad, the not-played advertisement becomes a loss to an advertiser or a publisher.

According to one or more embodiments, the publisher, SSP, or consumer side may separately save and reuse the not-played advertisement, and profits of the advertiser or publisher may be improved.

According to an embodiment of the disclosure, a part of advertisements to be inserted in content in a real time bidding system may be replaced with a reusable advertisement. Therefore, the number of advertisements bidding in real time from the ad network or the ad exchange is reduced, thereby increasing the rate of the advertisements exposed to the actual consumer to the number of the bid advertisements (that is, Ads render rate).

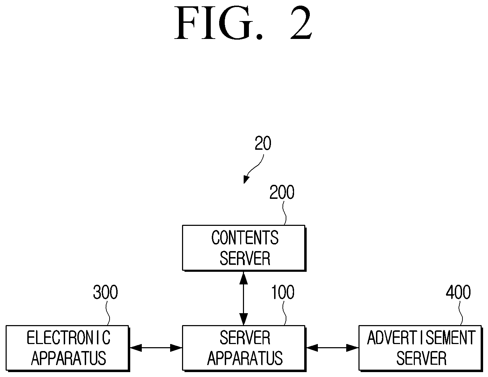

FIG. 2 is a diagram illustrating a configuration of an advertisement system according to one or more embodiments of the disclosure. Referring to FIG. 2, the advertisement system 20 includes a server apparatus 100, a content server 200, an electronic apparatus 300, and an advertisement server 400.

The electronic apparatus 300 is a device used by a consumer, that is, a user consuming an advertisement, and may be, for example, various display devices like a smart TV, a smartphone, a tablet, an electronic frame, signage, or the like. Alternatively, the electronic apparatus 300 may be a set-top box connected to a separate display device (e.g., TV, monitor, or the like).

The user of the electronic apparatus 300 may watch various image content provided through a broadcasting service, a video share service, a web service, or the like.

For example, a program for watching a video content like a video player, a web browser may be provided in the electronic apparatus 300, and a user may watch various broadcasting programs or VOD through a video player, and may use services provided by the website by accessing various websites through web browser.

According to one or more embodiments, the electronic apparatus 300 may request an image content to the server apparatus 100 according to a user command.

The content server 200 may provide image content (or video content). An image content (or video content) refers to various image contents other than advertisement content prepared to advertise a specific advertisement target by an advertiser or an agency.

For example, the content server 200 may be a broadcast content providing server to provide a broadcast content, a VOD content providing server to provide various VOD contents, or a web server providing a web service, but is not limited thereto.

In particular, according to one or more embodiments of the disclosure, the content server 200 may provide image content to the server apparatus 100 according to a request of the server apparatus 100. In addition, the content server 200 may provide the information related to an advertisement to be inserted to the image content to the server apparatus 100.

The information related to an advertisement may include at least one of information about the number of advertisements to be inserted in an image content and information about a location where an advertisement is to be inserted. The number of advertisements to be inserted in an image content or a location where an advertisement content is to be inserted may be predefined by a contract for image content, and a detail is not related to the gist of the disclosure and thus detailed description will be omitted.

The advertisement server 400 may provide advertisement content. The advertisement content may mean an image content prepared by an advertiser or an agency to advertise a specific advertisement subject.

The advertisement server 400 may be an ad exchange or ad network described in FIG. 1, but is not limited thereto. For example, the server may be a server like a DSP server or a server run by advertiser or agency.

The server apparatus 100 may insert an advertisement content in the requested image content and provide the same to the electronic apparatus 300, when an image content is requested from the electronic apparatus 300.

To be specific, the server apparatus 100 may, based on request of image content from the electronic apparatus 300, request the image content to the content server 200 providing the corresponding image content.

Accordingly, when image content and information related to an advertisement to be inserted into the image content are received from the content server 200, the server apparatus 100 may identify the number of advertisements to be inserted into the image content based on the information related to the advertisement, and request the corresponding number of advertisement content to the advertisement server 400.

When a corresponding number of advertisement content is received from the advertisement server 400 through real-time bidding, the server apparatus 100 may identify a location to which the advertisement content is to be inserted, based on the information related to the advertisement, insert the advertisement content at the corresponding location of the image content, generate the image content into which the advertisement content is inserted, and then transmit the generated image content to the electronic apparatus 300.

Accordingly, the electronic apparatus 300 may play the image content into which the advertisement content is inserted. The server apparatus 100 may monitor whether the inserted advertisement content is played in the electronic apparatus 300, and when there is an unplayed advertisement content, may store the advertisement content.

To be specific, the server apparatus 100 may, based on receiving information to identify whether the advertisement content inserted into an image content is played from the electronic apparatus 300, identify whether the advertisement content is played based thereon.

For example, the electronic apparatus 300 may transmit, to the server apparatus 100, information about the play time of the image content into which the advertisement content is inserted. Since the server apparatus 100 knows the insertion location of the advertisement, it is possible to identify which advertisement content has been played and which advertisement content has not been played, compared to the information on the play time.

The electronic apparatus 300 may identify the played advertisement content by using an auto content recognition (ACR) technology. The electronic apparatus 300 may transmit information about the identified advertisement content to the server apparatus 100, and the server apparatus 100 may identify which advertisement content has been played based on the information received from the electronic apparatus 300, and may identify which advertisement content has not been played.

Alternatively, an image advertisement content may be manufactured according to moving picture experts group (MPEG) standard and thus, the electronic apparatus 300 may transmit a specific signal generated when the TS packet containing the advertisement content is depacketized to the server apparatus 100, and the server 100 may identify whether the advertisement content has been played based on the specific signal received from the electronic apparatus 300.

As such, as a result of identifying play of advertisement content, if there is advertisement content not played, the server apparatus 100 may store unplayed advertisement content and may reuse the advertisement content thereafter.

When image content is requested from the electronic apparatus 300 in a state in which advertisement content not played in the server apparatus 100 is stored, the server apparatus 100 may request the requested image content to the content server 200. The image contents requested by the electronic apparatus 300 may be image contents such as the above-described image contents or other image contents.

When the requested image content and information related to the advertisement are received from the content server 200, the server apparatus 100 may check whether the unplayed advertisement content is stored. When the unplayed advertisement content is stored, the server apparatus 100 may insert the stored unplayed advertisement content into the image content.

The server apparatus 100 may check the number of advertisements to be inserted into the image content based on the information related to the advertisement. When the number of advertisements to be inserted is greater than the number of advertisement content stored in the server apparatus 100, the server apparatus 100 may request and receive an insufficient number of advertisement content to the advertisement server 400, and then additionally insert the received advertisement content into the image content.

The server apparatus 100 may transmit image content into which advertisement content is inserted to the electronic apparatus 300 and may monitor whether to play advertisement content again.

According to one embodiment of the disclosure, an advertisement content which was inserted into an image content through real bidding but has not been executed may be reused, so the Ads render rate may be raised and accordingly, profits of the advertiser or publisher may be promoted.

It has been exemplified that the server apparatus 100 is implemented separately from the content server 200, but according to an embodiment, a function of the server apparatus 100 may be implemented in the content server 200.

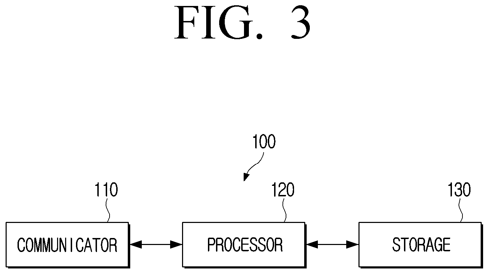

FIG. 3 is a block diagram illustrating a configuration of a server apparatus according to one or more embodiments of the disclosure. Referring to FIG. 3, the server apparatus 100 includes a communicator 110, a processor 120, and a storage 130 (e.g., memory).

The communicator 110 may communicate with various external devices according to various types of communication methods. In particular, the communicator 110 may communicate with the electronic apparatus 300, the content server 200, and the advertisement server 400, respectively, to transmit and receive various information or data described above or to a corresponding device or server.

The communicator 110 may include a wired LAN communication module. In addition, the communicator 110 may include a wireless LAN communication module such as a Wi-Fi communication module. In addition, the communicator 110 may include a short-range wireless communication module (not shown) or a mobile communication module according to an embodiment. The short-range wireless communication module (not shown) refers to a communication module for wirelessly communicating with an electronic apparatus located in a short distance, such as, for example, a Bluetooth module, a ZigBee module, a near field communication (NFC) module, and the like. In addition, the mobile communication module refers to a communication module that performs communication by accessing a mobile communication network according to various mobile communication standards such as third generation (3G), third generation partnership project (3 GPP), long term evolution (LTE), and the like.

According to one or more embodiments, the communicator 110 may include a broadcast reception module, and may include at least one of a wired communication module (not shown) like universal serial bus (USB), Institute of Electrical and Electronics Engineers (IEEE) 1394, RS-232, High Definition Multimedia Interface (HDMI), or the like, may be included.

The storage 130 may store an operating system (OS) for controlling the overall operation of the server apparatus 100. In addition, the storage 130 may store various algorithms, programs, data, and the like for performing various functions of the server apparatus 100 described above or below. In particular, the storage 130 may store unplayed advertisement content. The unplayed advertisement content may be classified and stored for each person or group. This will be described in detail below.

The storage 130 may include a volatile memory like DRAM, SRAM, EEPOM that may maintain information in a power-off state, or flash memory. The storage 130 may include a hard disk drive (HDD), solid state drive (SSD), or a memory card (e.g., secure digital (SD) card, memory stick) detachable from the electronic apparatus 300.

The processor 120 may control overall operations of the server apparatus 100. The processor 120 may include at least one processor 120. For example, the processor 120 may include one or more of a central processing unit (CPU), an application processor (AP), or a communication processor (CP).

In particular, based on receiving a request for the first image content from the first electronic apparatus, the processor 120 may insert the first advertisement content to the first image content and transmit the content to the electronic apparatus 300.

In detail, the processor 120 may control the communicator 110 to transmit a request for advertisement content to the advertisement server 400 when a request for the first image content is received from the first electronic apparatus. In addition, when the first advertisement content is received from the advertisement server 400, in response to a request for the advertisement content, the processor 120 may insert the received first advertisement content into the first image content.

According to an embodiment of the disclosure, when a request for first image content is received from the first electronic apparatus, the processor 120 may request the first image content from the content server 200 providing the first image content, and when the first image content is received from the content server 200, the processor 120 may insert the first advertisement content into the received first image content. According to an embodiment, when the function of the server apparatus 100 is implemented in the content server 200, since the first image content is stored in the server apparatus 100, the processor 120 may insert the first advertisement content into the stored first image content.

Therefore, the processor 120 may control the communicator 110 to transmit the first image content to which the first advertisement content is inserted to the first electronic apparatus.

According to an embodiment of the disclosure, when a request for first image content is received from the server apparatus 100, the content server 200 may transmit not only the first image content but also information related to an advertisement to be inserted into the first image content to the server apparatus 100.

As described above, since the information related to the advertisement to be inserted into the first image content includes the information on the number of advertisements to be inserted and the information on the insertion location of the advertisement, the processor 120 may request advertisement content corresponding to the corresponding number to the advertisement server 400 based on the information on the number of advertisements to be inserted. That is, for convenience of description, an example in which one advertisement content (that is, first advertisement content) is requested to the advertisement server 400 and received is described, but embodiments are not limited thereto. In addition, when receiving a plurality of advertisement contents from the advertisement server 400, the processor 120 may insert each advertisement content into a predefined location of the first image content based on the information on the insertion location of the advertisement.

The processor 120 may monitor whether the first advertisement content is played in the first electronic apparatus and if the content is not played, the processor 120 may store the first advertisement content in the storage 130.

In detail, when identification information on whether to play the first advertisement content inserted into the first image content is received from the first electronic apparatus, the processor 120 may identify whether to play the first advertisement content based on the received identification information.

The information for identifying whether to play the first advertisement content inserted into the first image content may include at least one of information about a play time played in the first electronic apparatus or information generated by the electronic apparatus when the first advertisement content is played (for example, information on advertisement content identified by using ACR technology in the first electronic apparatus or a specific signal generated when the TS packet including the first advertisement content is depacketized) when the first advertisement content is played.

Accordingly, when it is identified that the first advertisement content is not played, the processor 120 may store the first advertisement content which has been inserted into the first image content but is not played in the storage 130. According to an embodiment, as described above, when a plurality of advertisement contents are inserted into the first image content, a plurality of played advertisement contents may also be provided, and the processor 120 may store all the advertisement contents identified as not being played in the storage 130.

After the first advertisement content not played is stored in the storage 130, when a request for the second image content is received from the first electronic apparatus, the processor 120 may insert the first advertisement content stored in the storage 130 into the second image content, and may control the communicator 110 to transmit the second image content into which the first advertisement content is inserted into the first electronic apparatus.

For example, when a request for the second image content is received from the first electronic apparatus, the processor 120 may request the second image content to the content server 200 providing the second image content. The content server 200 providing the second image content may be the same as or different from the content server 200 providing the first image content. Accordingly, when the second image content is received from the content server 200, the processor 120 may insert the first advertisement content stored in the storage 130 into the second image content and transmit the second image content into which the first advertisement content is inserted to the first electronic apparatus.

According to an embodiment of the disclosure, when a request for second image content is received from a first electronic apparatus, the processor 120 may request second image content to the content server 200 providing second image content. The content server 200 may transmit, to the server apparatus 100, information related to an advertisement to be inserted into the second image content in addition to the second image content.

Accordingly, the processor 120 may identify the number of advertisement content to be inserted into the second image content based on information related to an advertisement to be inserted into the second image content. When the identified number is greater than the number of advertisement content stored in the storage 130, the processor 120 may request advertisement content as many as the insufficient number to the advertisement server 400.

For example, if the number of advertisements to be inserted into the second image content is two and the unplayed advertisement content stored in the storage 130 is the first advertisement content, the processor 120 may request insufficient advertisement content, that is, the second advertisement content, to the advertisement server 400.

Accordingly, when the second advertisement content is received from the advertisement server 400, the processor 120 may insert the first advertisement content stored in the storage 130 and the second advertisement content newly received from the advertisement server 400 into the second image content, and may control the communicator 110 to transmit the second image content into which the first and second advertisement content is inserted to the first electronic apparatus.

As such, according to one or more embodiments of the disclosure, an unplayed advertisement content may be reused so profits of advertiser and publisher may be promoted.

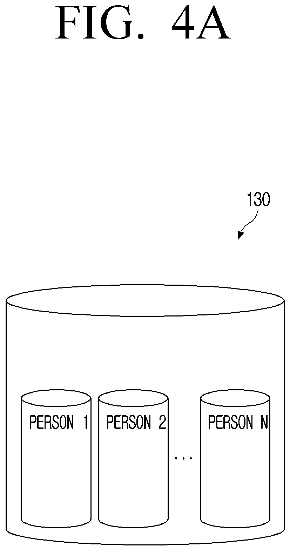

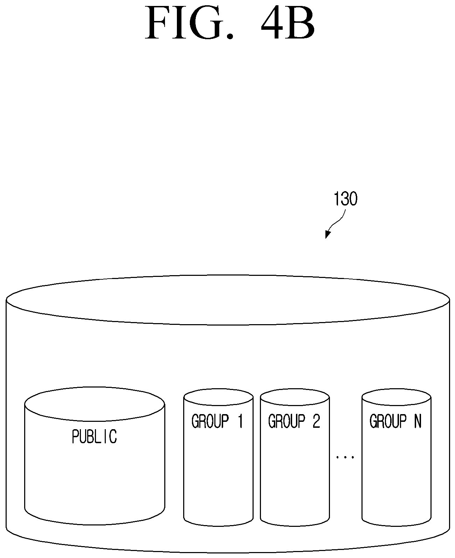

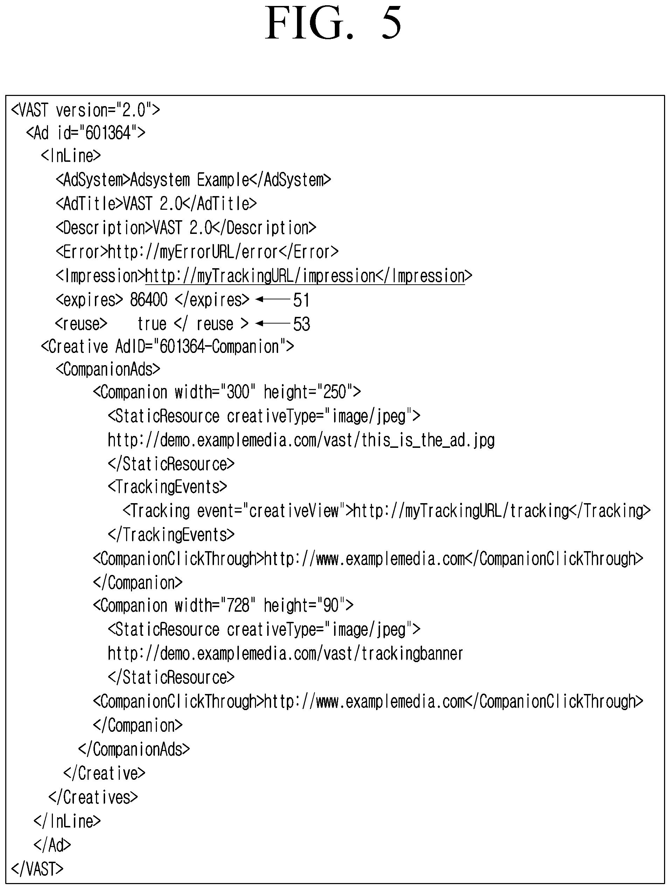

Hereinbelow, through FIGS. 4A, 4B and 5, various embodiments related to operation of an unplayed advertisement (that is, reusable advertisement) not stored in the storage 130 will be described.

FIG. 4A is a diagram illustrating operation of a reusable advertisement according to one or more embodiments of the disclosure. According to one or more embodiments, the processor 120 may store and manage unplayed advertisement by persons.

For this, when requesting image content, the electronic apparatus 300 may transmit a private key corresponding to the electronic apparatus 300 to the server apparatus 100. That is, the first electronic apparatus may transmit a first private key corresponding to the first electronic apparatus together with a request for the first image content to the server apparatus 100.

Accordingly, the processor 120 may receive a first private key corresponding to the first electronic apparatus together with a request for the first image content from the first electronic apparatus. The processor 120 may, based on identifying that the first advertisement content is not played based on identification information corresponding to whether to the first advertisement content is played, match the unplayed first advertisement content with a first private key and store the matched advertisement content in the storage 130.

When the first advertisement content is matched to the first private key and stored in the storage 130, when the first private key is received together with the request for the second image content from the first electronic apparatus, the processor 120 may identify whether the stored advertisement content matching the first private key is in the storage 130. Accordingly, when the first advertisement content is identified, the processor 120 may insert the first advertisement content into the second image content and control the communicator 110 to transmit the second image content into which the first advertisement content is inserted to the first electronic apparatus.

If the first advertisement content is matched to the first private key and stored in the storage 130, if a second private key corresponding to the second electronic apparatus is received together with the request for the third image content from the second electronic apparatus, the processor 120 may identify whether the advertisement matching the second private key and stored is in the storage 130. Because the storage 130 does not have the stored advertisement content matching the second private key, the processor 120 may request new advertisement content to the advertisement server 400 and receive the content, and may insert the received advertisement content into the third image content, and transmit the content to the second electronic apparatus.

The "person 1", "person 2" to "person N" illustrated in FIG. 4A indicates that unplayed advertisement contents are matched with each personal key and stored or managed by persons.

Therefore, according to one or more embodiments, advertisement content not played is stored and managed by persons, so if an advertisement content not played is reused, advertisement content targeted to each person may be provided.

FIG. 4B is a diagram illustrating operation of a reusable advertisement according to one or more embodiments of the disclosure. According to one or more embodiments of the disclosure, the processor 120 may store and manage unplayed advertisement contents by groups.

As described above, when requesting image content, the electronic apparatus 300 may transmit a private key corresponding to the electronic apparatus 300 to the server apparatus 100. Accordingly, the first electronic apparatus may transmit a first private key corresponding to the first electronic apparatus together with a request for the first image content to the server apparatus 100.

According to an embodiment of the disclosure, when a first private key is received together with a request for first image content from a first electronic apparatus, the processor 120 may allocate a first private key to a first group among a plurality of groups. Each of the plurality of groups may be a group classified according to at least one of gender, age group, or region. For example, "Group 1" in FIG. 4B may be women in their 30s in Seoul region, "Group 2" may be men in their 40s in Jeju region, and "Group N" may be men in their 10s in the metropolitan area, but is not limited thereto.

The advertisement content received in the advertisement server 400 may include information on an advertisement target group. Therefore, the processor 120 may identify information on an advertisement target group included in the first advertisement content and allocate a first private key to the identified group. Alternatively, when requesting image content, the electronic apparatus 300 may transmit viewing history information of the electronic apparatus 300 together with a private key corresponding to the electronic apparatus 300 to the server apparatus 100.. Accordingly, the processor 120 may analyze the viewing history information received from the first electronic apparatus, determine a group corresponding to the first private key among the plurality of groups, and allocate the first private key to the determined group.

Thereafter, when it is identified that the first advertisement content inserted into the first image content is not played, the processor 120 may match the first advertisement content to a first group to which the first private key is allocated and store the first advertisement content in the storage 130.

As described above, when the first advertisement content is matched to the first group and stored in the storage 130, if a second private key corresponding to the second electronic apparatus is received together with the request for the third image content from the second electronic apparatus, the processor 120 may identify the group to which the second private key is allocated among the plurality of groups.

If the second private key is identified as being allocated to the same first group as the group to which the first private key is allocated, the processor 120 may insert the first advertisement content into the third image content and control the communicator 110 to transmit the third image content into which the first advertisement content is inserted to the second electronic apparatus.

If, for example, it is identified that the second personal key is allocated to another group instead of the first group, the processor 120 may insert the identified advertisement content matched and stored in another group into the third image content and may transmit the content to the second electronic apparatus.

If it is identified, for example, that the second private key is not allocated to any group, the processor 120 may request and receive new advertisement content from the advertisement server 400, insert the received new advertisement content into the third image content, and transmit the third image content to the second electronic apparatus.

As such, when the unplayed advertisement content is matched by groups instead of persons and stored or managed, a usage rate of the unplayed advertisement may be further increased.

According to an embodiment of the disclosure, the advertisement target included in the information on the above-described advertisement target group may be "all people". Alternatively, although viewing history information received from the electronic apparatus 300 is analyzed, it may not be possible to allocate any group among a plurality of groups.

The processor 120 may match the unplayed first advertisement content to the public group and store the matched first advertisement content in the storage 130. The public group is a group matched with advertisement content which may be provided to anyone regardless of a private key or group. The "public" of FIG. 4B represents a public group.

FIG. 5 is a diagram illustrating an expires tag and a reuse tag according to one or more embodiments of the disclosure.

The advertisement content provided by the advertisement server 400 may include an expires tag including information about the advertisement validation period. For example, video ad serving template (VST), an on-line video standard, includes an expires tag of "Expires".

According to the standard, if the validity period of the advertisement included in the expires tag is elapsed, the advertisement content is no longer valid, and the advertisement content cannot be reused. Therefore, reuse of the above-mentioned non-played advertisement is based on an assumption that even if the advertisement validity period exists, but the period is not elapsed, or there is no advertisement validity period (for example, if the Expires tag has a NULL value or does not have a corresponding value, etc.).

According to an embodiment of the disclosure, when a request for second image content is received from a first electronic apparatus, the processor 120 may identify whether an advertisement validity period is reached or not based on an expires tag of the first advertisement content, and insert the first advertisement content stored in the storage 130 into the second image content and transmit the second image content to the first electronic apparatus when the advertisement validity period is not elapsed.

Even for unplayed advertisement content, the advertiser may not want to reuse. Even in this case, only checking the validity period, and reusing the advertisement will run counter to the intention of the advertiser. Therefore, according to an embodiment of the disclosure, by introducing a reuse tag including information about whether to reuse an advertisement, the intention of the advertiser for an unplayed advertisement may be reflected.

According to an embodiment of the disclosure, the first advertisement content may include a reuse tag including information on whether an unplayed advertisement is reused. Accordingly, when a request for the second image content is received from the first electronic apparatus, the processor 120 may identify whether or not the advertisement may be reused based on the reuse tag of the first advertisement content, and when it is identified that the advertisement may be reused, insert the first advertisement content stored in the storage 130 into the second image content and transmit the second image content to the first electronic apparatus.

According to one or more embodiments, both the expires tag and the reuse tag may be used. In this example, when receiving a request for the second image content from the first electronic apparatus, the processor 120 may identify whether the advertisement validity period is elapsed or the advertisement is reusable based on the expires tag and the reuse tag of the first advertisement content, and if it is identified that the advertisement validity period is not elapsed, and the advertisement is reusable, the processor 120 may insert the first advertisement content stored in the storage 130 in the second image content and transmit the same to the first electronic apparatus.

FIG. 5 illustrates an example in which the expiration period tag 51 and the reuse tag 52 are applied to the VAST. Although the case where the reusability is displayed on the reuse tag 52 is shown in FIG. 5, an embodiment utilizing the reuse tag 52 is not limited thereto. For example, the reuse period or the reuse condition may be displayed on the reuse tag 52, and when the displayed period or condition is satisfied, the unplayed advertisement content may be reused.

When the reuse of unplayed advertisement is allowed through the reuse tag by the advertiser, the possibility of exposure of the advertisement is relatively high, so that the advertiser may set an advertisement cost at a lower price and tender bids.

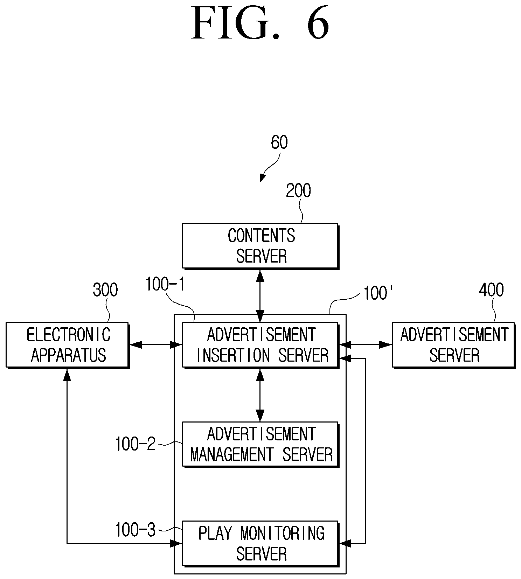

FIG. 6 is a diagram illustrating a configuration of an advertisement system according to one or more embodiments of the disclosure. In illustrating FIG. 6, a duplicate description with the aforementioned description will be omitted or shortened and a difference will be described mainly.

According to FIG. 6, the advertisement system 60 includes the electronic apparatus 300, a content server 200, an advertisement server 400, and a server apparatus 100'. The server apparatus 100' may include an advertisement insertion server 100-1, an advertisement management server 100-2, and a play monitoring server 100-3. That is, according to an embodiment of the disclosure, the functions of the server apparatus 100 described above may be implemented through a plurality of servers 100-1, 100-2, 100-3.

The advertisement management server 100-2 is a kind of database and may perform the function of the storage 130 described above. The play monitoring server 100-3 may perform a function of monitoring whether or not advertisement content inserted into the image content is played among the functions of the processor 120 described above. The advertisement insertion server 100-1 may perform the remaining functions except for the function of monitoring whether to play advertisement content inserted into the image content among the functions of the processor 120 described above.

To be specific, when receiving a request for the first image content from the first electronic apparatus, the advertisement insertion server 100-1 may insert the first advertisement content to the first image content and transmit the same to the electronic apparatus 300.

For example, the advertisement insertion server 100-1 may, based on receiving a request for the first image content from the first electronic apparatus, request the first image content to the content server 200 providing the first image content.

Accordingly, when information related to an advertisement to be inserted into the first image content and the first image content is received from the content server 200, the advertisement insertion server 100-1 may transmit a request for the advertisement content to the advertisement server 400 based on information related to an advertisement to be inserted into the first image content.

In addition, when the first advertisement content is received from the advertisement server 400 in response to a request for the advertisement content, the advertisement insertion server 100-1 may insert the first advertisement content into the first image content based on information related to an advertisement to be inserted into the first image content.

The advertisement insertion server 100-1 may transmit the first image content to which the first image content to which the first advertisement content is inserted to the first electronic apparatus.

The play monitoring server 100-3 may monitor whether the first advertisement content is played, and may transmit the monitoring result to the advertisement insertion server 100-1.

When identification information on whether to play the first advertisement content inserted in the first image content is received from the first electronic apparatus, the play monitoring server 100-3 may identify whether to play the first advertisement content based on the received identification information.

Accordingly, if it is identified that the first advertisement content is not played, the play monitoring server 100-3 may notify the advertisement insertion server 100-1 that the first advertisement content is not played.

The advertisement insertion server 100-1 may store the advertisement content which was inserted to the first image content but not played, in the advertisement management server 100-2.

When a request for the second image content is received from the first electronic apparatus after the unplayed first advertisement content is stored in the advertisement management server 100-2, the advertisement insertion server 100-1 may request and receive the first advertisement content from the advertisement management server 100-2. Accordingly, the advertisement insertion server 100-1 may insert the first advertisement content into the second image content and transmit the content to the first electronic apparatus.

According to one or more embodiments of the disclosure, when a request for the second image content is received from the first electronic apparatus, the advertisement insertion server 100-1 may request the second image content to the content server 200 providing the second image content. The content server 200 may transmit, to the server apparatus 100, information related to an advertisement to be inserted into the second image content in addition to the second image content.

Accordingly, the advertisement insertion server 100-1 may identify the number of advertisement content to be inserted into the second image content based on the information related to an advertisement to be inserted into the second image content. When the identified number is greater than the number of advertisement contents stored in the advertisement management server 100-2, the advertisement insertion server 100-1 may request advertisement content from the advertisement server 400 as many as the number of insufficient advertisements.

For example, if the number of advertisements to be inserted into the second image content is two and the unplayed advertisement content stored in the advertisement management server 100-2 is the first advertisement content, the advertisement management server 100-2 may request the advertisement server 400 for the insufficient one advertisement content, that is, the second advertisement content.

Accordingly, when the second advertisement content is received from the advertisement server 400, the advertisement management server 100-2 may insert the first advertisement content stored in the advertisement management server 100-2 and the second advertisement content newly received from the advertisement server 400 into the second image content, and transmit, to the first electronic apparatus, the second image content into which the first and second advertisement content is inserted.

The advertisement management server 100-2 may classify the unplayed advertisement by persons or groups, store or manage the advertisements.

For example, the advertisement insertion server 100-1 may receive a first private key corresponding to the first electronic apparatus together with a request for the first image content from the first electronic apparatus. Accordingly, when it is identified that the first advertisement content is not played, the advertisement insertion server 100-1 may match the unplayed first advertisement content to the first private key and store the content in the advertisement management server 100-2.

When the first advertisement content is matched to the first private key and stored in the advertisement management server 100-2, when the first private key is received together with the request for the second image content from the first electronic apparatus, the advertisement insertion server 100-1 may identify whether the stored advertisement content matching the first private key is present in the advertisement management server 100-2. Accordingly, when the first advertisement content is identified, the advertisement insertion server 100-1 may request and receive the first advertisement content from the advertisement management server 100-2, insert the first advertisement content into the second image content, and transmit the second image content into which the first advertisement content is inserted to the first electronic apparatus.

According to one or more embodiments, the advertisement insertion server 100-1 may, based on receiving the first private key along with the request for the first image content from the first electronic apparatus, allocate the first private key to one of the plurality of groups.

If it is identified that the first advertisement content inserted into the first image content is not played, the advertisement insertion server 100-1 may match the first advertisement content with the first group to which the first private key is allocated, and may store the content in the advertisement management server 100-2.

When the first advertisement content is matched to the first group and stored in the advertisement management server 100-2, if a second private key corresponding to the second electronic apparatus is received together with the request for the third image content from the second electronic apparatus, the advertisement insertion server 100-1 may identify the group to which the second private key is allocated among the plurality of groups.

If the second private key is identified as being allocated to the same first group as the group to which the first private key is allocated, the advertisement insertion server 100-1 may request and receive the first advertisement content from the advertisement management server 100-2, insert the first advertisement content into the third image content, and transmit the third image content into which the first advertisement content is inserted to the second electronic apparatus.

In addition, embodiments related to an embodiment in which first advertisement content which is not played is matched to a public group and stored in the advertisement management server 100-2, and embodiments related to an expires tag and a reuse tag are all applicable with only a different subject performing a related function, and thus a redundant description thereof will be omitted.

The server apparatus 100, 100' described above may be applied, for example, to a server operated by a publisher in the real-time advertisement system 10 of FIG. 1, but is not limited thereto. That is, for example, the server may be applied to a server operated by the SSP.

A method of technically inserting a video advertisement into an image content includes a server-side ads insertion (SSAI) and a client-side ads insertion (CSAI).

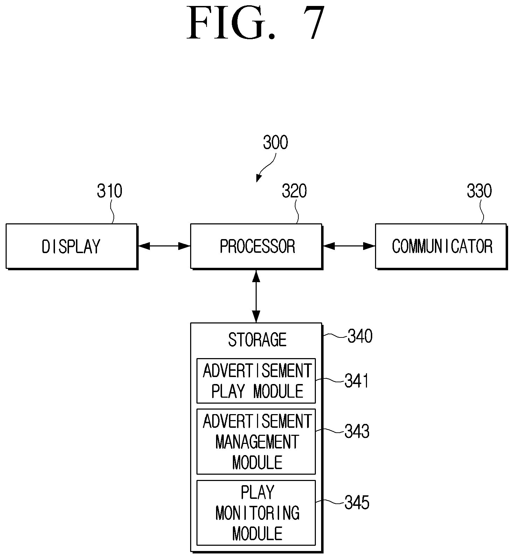

Hereinabove, among the methods of inserting a video advertisement into an image content, a method of inserting a server-side ads insertion (hereinafter, SSAI) is described as an example. However, embodiments are not limited thereto, and as will be described with reference to FIG. 7, the above various embodiments may be applied to a client-side ads insertion (CSAI).

FIG. 7 is a block diagram illustrating an electronic apparatus according to one or more embodiments of the disclosure. According to embodiments, some elements of FIG. 7 may be omitted or changed, or other elements may be further added. **In** describing FIG. 7, a description overlapped with the former description will be omitted or shortened.

Referring to FIG. 7, the electronic apparatus 300 includes a display 310, a processor 320, a communicator 330, and a storage 340.

The display 310 may display various visual information such as a still image, a video, a user interface (UI), an icon, and the like. In particular, the display 310 may receive the control of the processor 320 and display the image content into which the advertisement content is inserted. The display 310 may be implemented in various forms such as a liquid crystal display panel (LCD), a light emitting diode (LED), an organic light emitting diode (OLED) display, a micro LED, and the like. In addition, the display 310 may be combined with a touch panel to be implemented in the form of a touch screen.

The communicator 330 may communicate with various external devices according to various types of communication methods. In particular, the communicator 330 may perform communication with each of the content server 200 and the advertisement server 400 to transmit and receive various information or data described above to a corresponding server.

The communicator 330 may include a wired and wireless LAN communication module. In addition, the communicator 330 may include a short-range wireless communication module (not shown) or a mobile communication module according to an embodiment. The short-range wireless communication module (not shown) refers to a communication module for wirelessly communicating with an electronic apparatus located in a short distance, such as, for example, a Bluetooth module, a ZigBee module, a near field communication (NFC) module, and the like. In addition, the mobile communication module refers to a communication module that performs communication by accessing a mobile communication network according to various mobile communication standards such as third generation (3G), third generation partnership project (3GPP), long term evolution (LTE), and the like.

According to an embodiment, the communicator 330 may include a broadcast receiving module, and may include at least one of a wired communication module (not shown) such as Universal Serial Bus (USB), Institute of Electrical and Electronics Engineers (IEEE) 1394, RS-232, and the like.

When the electronic apparatus 300 is implemented as a set-top box including no display 310 or only a simple display unit for notification, the communicator 330 may include an output port such as a display unit (DP) for outputting a video/audio signal to an external display device such as a monitor or a TV, a Thunderbolt, an HDMI, and the like. In addition, according to an embodiment, each of the video jack and the audio jack for separately outputting a video signal and an audio signal may be included.

The storage 340 may store operating system (OS) for controlling overall operations of the electronic apparatus 300. The storage 340 may store various algorithms, program modules, data, or the like, that may perform various functions of the processor 120 of the server apparatus 100 or functions of the advertisement insertion server 100-1, advertisement management server 100-2, play monitoring server 100-3 included in the server apparatus 100'.

To be specific, the storage 340 may include an advertisement play module 341, an advertisement management module 343, and a play monitoring module 345.

The advertisement management module 343 is a kind of database and may perform the function of the storage 130 of the server apparatus 100 described above. The play monitoring module 345 may perform a function of monitoring whether or not advertisement content inserted into the image content is played among functions of the processor 120 of the server apparatus 100 described above. The advertisement play module 341 may perform the remaining functions other than the function of the play monitoring module 345 among the functions of the processor 120 of the server apparatus 100 described above.

The storage 340 may store various applications like a video player or a web browser.

The storage 340 may include a volatile memory like DRAM and SRAM and a non-volatile memory like EEPROM that may maintain information in a power-off state and a flash memory. The storage 340 may include a hard disk drive (HDD), solid state drive (SSD), or a memory card (e.g., secure digital (SD) card, memory stick) detachable to the electronic apparatus 300.

The processor 320 may control hardware or software components connected to the processor 320 by driving an operating system or application program, and perform various data processing and operations. The processor 320 may load or process commands or data received from at least one of the other components into the volatile memory and store the various data in a non-volatile memory.

The processor 320 may include at least one processor 320. For example, the processor 320 may include one or more of a central processing unit (CPU), application processor (AP), or communication processor (CP).

In particular, the processor 320 may similarly perform the functions of the advertisement insertion server 100-1, the advertisement management server 100-2, and the play monitoring server 100-3 of the server apparatus 100' described above, respectively, by using the advertisement play module 341, the advertisement management module 343, and the play monitoring module 345 stored in the storage 340.

For example, when play of the first image content is requested by a video player, the advertisement play module 341 may request the first image content to the content server 200.

When a request for the first image content is received, the content server 200 may transmit first image content and information related to an advertisement to be played when playing the first image content to the electronic apparatus 300. The information related to the advertisement to be played when playing the first image content may include information on the number of advertisements and advertisement play time.

When receiving first image content and information related to advertisement to be played when playing the first image content, the advertisement play module 341 may transmit a request for the advertisement content to the advertisement server 400 based on the information related to the received advertisement.

When the first advertisement content is received from the advertisement server 400, the advertisement play module 341 may play the first image content and the first advertisement content. The advertisement play module 341 may stop playing the first image content at a predefined advertisement play time and play the first advertisement content based on the information related to the advertisement. Thereafter, when the play of the first advertisement content is terminated, the advertisement play module 341 may continuously play the first image content.

The play monitoring module 345 may monitor whether to play the first advertisement content. For example, the play monitoring module 345 may identify whether to play an advertisement by using ACR technology or detecting a specific signal generated when a TS packet including advertisement content is depacketized.

Accordingly, if it is identified that the first advertisement content is not played, the play monitoring module 345 may inform that the first advertisement content has not been played to the advertisement play module 341, and the advertisement play module 341 may store the unplayed first advertisement content through the advertisement management module 343.

When play of the second image content is requested through the video player after the unplayed first advertisement content is stored in the storage 340, the advertisement play module 341 may request and receive the second image content from the content server 200, request the first advertisement content to the advertisement management module 343 and receive, and may play the second image content and the first advertisement content.

An embodiment in which the advertisement management module 342 stores and manages an unplayed advertisement by classifying for each person or group, or an embodiment related to the expires tag and the reuse tag may be applied to the electronic apparatus 300 as it is, and thus a redundant description thereof will be omitted.

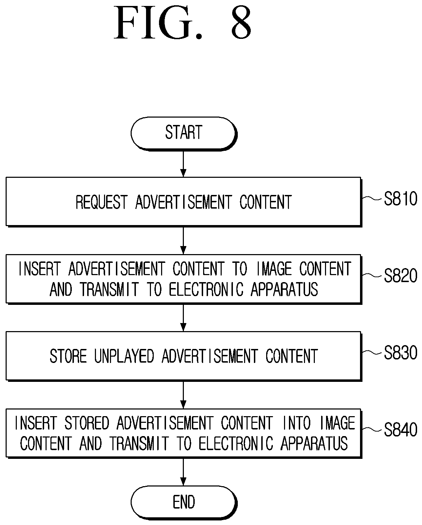

FIG. 8 is a flowchart illustrating a method of controlling a server apparatus according to one or more embodiments of the disclosure. Referring to FIG. 8, when receiving the first image content from the first electronic apparatus, the server apparatus 100, 100' may transmit a request for the advertisement content to the advertisement server 400 in operation S810.

Accordingly, when the first advertisement content is received from the advertisement server, the server apparatus 100, 100' may insert the received first advertisement content into the first image content and transmit, to the first electronic apparatus, the first image content into which the first advertisement content is inserted in operation S820.

When identification information on whether to play the first advertisement content inserted in the first image content is received from the first electronic apparatus, the server apparatus 100, 100' may identify whether to play the first advertisement content based on the received identification information, and when it is identified that the first advertisement content is not played, the server apparatus 100, 100' may store the first advertisement content in operation S830.

Then, when receiving the request for the second image content from the first electronic apparatus, the server apparatus 100, 100' may insert the stored first advertisement content to the second image content, and may transmit, to the first electronic apparatus, the second image content to which the first advertisement content is inserted in operation S840.

In addition, when a request for the second image content is received from the first electronic apparatus, the server apparatus 100, 100' may identify the number of advertisement content to be inserted into the second image content, and when the number of the identified advertisement content is greater than the number of stored advertisement content, may transmit a request for the advertisement content to the advertisement server 400. In addition, when the second advertisement content is received from the advertisement server 400 in response to the transmitted request, the server apparatus 100, 100' may insert the received second advertisement content and the stored first advertisement content into the second image content, and transmit, to the first electronic apparatus, the second image content into which the first and second advertisement content is inserted.

The server apparatus 100, 100' may receive the first private key corresponding to the first electronic apparatus along with the request for the first image content from the first electronic apparatus, and if it is identified that the first advertisement content is not played, the first advertisement content may be matched with the first private key and stored.

Thereafter, when the first private key is received together with a request for the second image content from the first electronic apparatus, the server apparatus 100, 100' may identify whether there is advertisement content matched with the first private key and stored, and when the first advertisement content is identified, the server apparatus 100, 100' may insert the first advertisement content into the second image content, and transmit the second image content into which the first advertisement content is inserted to the first electronic apparatus.

When a first private key corresponding to the first electronic apparatus is received together with a request for the first image content from the first electronic apparatus, the server apparatus 100, 100' may allocate the first private key to a first group among the plurality of groups, and when it is identified that the first advertisement content is not played, match the first advertisement content to the first group and store the same.

When a second private key corresponding to the second electronic apparatus is received together with a request for the third image content from the second electronic apparatus, the server apparatus 100, 100' may identify the group to which the second private key is allocated among the plurality of groups, insert the first advertisement content into the third image content when the second private key is identified as being allocated to the first group, and transmit the third image content into which the first advertisement content is inserted to the second electronic apparatus.

The plurality of groups are classified according to at least one criterion among gender, age group, or region, and the server apparatuses 100, 100' may allocate the first private key to the first group by identifying information about an advertisement target group included in the first advertisement content or analyzing viewing history information received from the first electronic apparatus.

When the advertisement target included in the information on the advertisement target group is all people, or when the first private key cannot be allocated to any one of the plurality of groups through analysis of the viewing history information, the server apparatus 100, 100' may match and store the first advertisement content to the public group. The public group may be a group in which advertisement content that may be provided to anyone regardless of a private key is matched.

According to an embodiment of the disclosure, the first advertisement content may include an expires tag including information about an advertisement validity period, and a reuse tag including information about whether to reuse the advertisement. Accordingly, when receiving a request for the second image content from the first electronic apparatus, the server apparatus 100, 100' may identify whether the advertisement validity period is elapsed and advertisement reuse is available, based on the expires tag of the first advertisement content and the reuse tag, and if it is identified that the advertisement validity period is not elapsed, and the advertisement reuse is available, the stored first advertisement content may be inserted into the second image content, and the second image content to which the first advertisement content is inserted to the first electronic apparatus.

Above, it has been described that the image content and the advertisement content are videos. However, embodiments are not limited thereto. For example, an ordinary skilled in the art may know that various embodiments are applicable to an image content and an advertisement content. According to various embodiments above, an advertisement content which was inserted into an image content but was not played may be reused, so the ads render rate may be increased, and accordingly, profits of an advertiser or a publisher may be promoted.

Various embodiments may be implemented in software, including instructions stored on machine-readable storage media readable by a machine (e.g., a computer). An apparatus may call instructions from the storage medium, and execute the called instruction, including the server 100, the contents server 200, or the electronic apparatus 300 according to the disclosed embodiments.

When the instructions are executed by a processor, the processor may perform a function corresponding to the instructions directly or by using other components under the control of the processor. The instructions may include a code generated by a compiler or a code executable by an interpreter. A machine-readable storage medium may be provided in the form of a non-transitory storage medium. Herein, the term "non-transitory" only denotes that a storage medium is tangible, and does not distinguish the case in which a data is semi-permanently stored in a storage medium from the case in which a data is temporarily stored in a storage medium.

According to an embodiment, the method according to the above-described embodiments may be included in a computer program product. The computer program product may be traded as a product between a seller and a consumer. The computer program product may be distributed online in the form of machine-readable storage media (e.g., compact disc read only memory (CD-ROM)) or through an application store (e.g., PLAYSTORETM, APPSTORETM) or distributed online directly. In the case of online distribution, at least a portion of the computer program product may be at least temporarily stored or temporarily generated in a server of the manufacturer, a server of the application store, or a machine-readable storage medium such as memory of a relay server.

According to embodiments, the respective elements (e.g., module or program) mentioned above may include a single entity or a plurality of entities. According to embodiments, at least one element or operation from among the corresponding elements mentioned above may be omitted, or at least one other element or operation may be added. Alternatively or additionally, a plurality of components (e.g., module or program) may be combined to form a single entity. The integrated entity may perform functions of at least one function of an element of each of the plurality of elements in the same manner as or in a similar manner to that performed by the corresponding element from among the plurality of elements before integration. The module, a program module, or operations executed by other elements according to variety of embodiments may be executed consecutively, in parallel, repeatedly, or heuristically, or at least some operations may be executed according to a different order, may be omitted, or the other operation may be added thereto.

The description above is merely illustrative of the technical idea of the disclosure, and various modifications and variations are possible within the scope of the disclosure without departing from the essential characteristics of the disclosure. In addition, the embodiments according to the disclosure are not intended to limit the technical idea of the disclosure, but the scope of the technical idea of the disclosure is not limited by the embodiment. Therefore, the protection scope of the disclosure should be interpreted by the following claims, and all the technical ideas within the equivalent scope thereof should be construed as being included in the scope of the disclosure.

## Claims

1. A server apparatus comprising:
a communicator;
at least one memory; and
at least one processor configured to:
transmit, to an external server through the communicator, a request of an advertisement content corresponding to a request of a first image content obtained from a first electronic apparatus;
based on obtaining a first advertisement content corresponding to the request of the advertisement content from the external server, transmit, to the first electronic apparatus through the communicator, the first image content into which the obtained first advertisement content is inserted;
store the first advertisement content in the at least one memory based on identification information corresponding to whether the first advertisement content included in the first image content is played; and
based on obtaining a request for a second image content from the first electronic apparatus, transmit, to the first electronic apparatus through the communicator, the second image content into which the stored first advertisement content is inserted.

2. The server apparatus of claim 1, wherein the at least one processor is further configured to:
based on a number of items of advertisement content to be inserted into the second image content being greater than the number of items of advertisement content stored in the at least one memory, transmit a request for another advertisement content to the external server through the communicator; and
based on obtaining a second advertisement content from the external server in response to the transmitted request, transmit the obtained second advertisement content and the second image content into which the first advertisement content stored in the at least one memory is inserted to the first electronic apparatus through the communicator.

3. The server apparatus of claim 1, wherein the at least one processor is further configured to:
obtain a first private key corresponding to the first electronic apparatus together with a request for the first image content from the first electronic apparatus; and
based on identifying that the first advertisement content is not played based on the identification information corresponding to whether to the first advertisement content is played, match the first advertisement content with the first private key and store the matched first advertisement content in the at least one memory.

4. The server apparatus of claim 3, wherein the at least one processor is further configured to: based on obtaining the first private key together with a request for the second image content from the first electronic apparatus, transmit the second image content, into which the first advertisement content matched with the first private key and stored is inserted, to the first electronic apparatus through the communicator.

5. The server apparatus of claim 1, wherein the at least one processor is further configured to:
based on obtaining a first private key corresponding to the first electronic apparatus together with a request for the first image content from the first electronic apparatus, allocate the first private key to a first group among a plurality of groups; and
based on identifying that the first advertisement content is not played based on the identification information corresponding to whether the first advertisement content is played, match the first advertisement content with the first group and store in the at least one memory.

6. The server apparatus of claim 5, wherein the at least one processor is further configured to: based on obtaining a second private key corresponding to a second electronic apparatus from the second electronic apparatus along with a request for a third image content, and based on the obtained second private key being allocated to the first group from among the plurality of groups, transmit the third image content into which the stored first advertisement content is inserted to the second electronic apparatus through the communicator.

7. The server apparatus of claim 5, wherein the plurality of groups are classified according to at least one criterion among gender, age group, or region, and
wherein the at least one processor is further configured to allocate the first private key to the first group according to information on an advertisement target group included in the first advertisement content or watching history information obtained from the first electronic apparatus.

8. The server apparatus of claim 7, wherein the at least one processor is further configured to:
based on an advertisement target included in information about the advertisement target group not having a restriction, or the first private key not being allocated to one of the plurality of groups according to the watching history information, match the first advertisement content with a public group and store in the at least one memory,
wherein the public group is a group in which an advertisement content is providable regardless of whether a private key is matched.

9. The server apparatus of claim 1, wherein the first advertisement content comprises an expiration tag indicating an advertisement validity period and a reusable tag indicating whether an advertisement is reusable, and
wherein the at least one processor is further configured to, based on the advertisement validity period not being elapsed and the advertisement being usable based on the expiration tag and the reusable tag of the first advertisement content, provide the first advertisement content stored in the at least one memory in the second image content and the second image content to which the first advertisement content is inserted to the first electronic apparatus through the communicator.

10. The server apparatus of claim 1, wherein the identification information corresponding to whether the first advertisement content is played comprises at least one of information about a play time that the first image content in which the first advertisement content is played in the first electronic apparatus or information generated in the first electronic apparatus based on the first advertisement content being played.

11. A method of controlling a server apparatus, the method comprising:
transmitting, to an external server, a request of an advertisement content corresponding to a request of a first image content obtained from a first electronic apparatus;
based on obtaining a first advertisement content corresponding to the request of the advertisement content from the external server, transmitting, to the first electronic apparatus, the first image content into which the obtained first advertisement content is inserted;
storing the first advertisement content based on identification information corresponding to whether the first advertisement content included in the first image content is played; and
based on obtaining a request for a second image content from the first electronic apparatus, transmitting, to the first electronic apparatus, the second image content into which the stored first advertisement content is inserted.

12. The method of claim 11, wherein the transmitting, to the first electronic apparatus, the second image content into which the stored first advertisement content is inserted comprises:
based on a number of items of advertisement content to be inserted into the second image content being greater than the number of items of advertisement content stored in at least one memory, transmitting a request for another advertisement content to the external server; and
based on obtaining a second advertisement content from the external server in response to the transmitted request, inserting the obtained second advertisement content and the stored first advertisement content in the second image content and transmitting the second image content into which the first advertisement content and the second advertisement content are inserted to the first electronic apparatus.

13. The method of claim 11, comprising:
obtaining a first private key corresponding to the first electronic apparatus together with a request for the first image content from the first electronic apparatus, and
wherein the storing comprises, based on identifying that the first advertisement content is not played based on the identification information corresponding to whether to the first advertisement content is played, matching the first advertisement content with the first private key and storing the matched advertisement content.

14. The method of claim 13, wherein the transmitting, to the first electronic apparatus, the second image content into which the first advertisement content is inserted comprises, based on obtaining the first private key together with a request for the second image content from the first electronic apparatus, transmitting the second image content, into which the first advertisement content matched with the first private key and stored is inserted, to the first electronic apparatus.

15. An advertisement system comprising:
an electronic apparatus;
an advertisement server; and
a server apparatus comprising at least one processor configured to execute at least one instruction stored in at least one memory to:
transmit, to the advertisement server, a request of an advertisement content corresponding to a request of a first image content obtained from the electronic apparatus,
based on obtaining the advertisement content corresponding to the request of the advertisement content from the advertisement server, transmit, to the electronic apparatus, the first image content into which the obtained advertisement content is inserted,
store the advertisement content based on identification information corresponding to whether a first advertisement content included in the first image content is played, and based on obtaining a request for a second image content from the electronic apparatus, transmit, to the electronic apparatus, the second image content into which the stored advertisement content is inserted.
